(19) Europäisches Patentamt
European Patent Office
Office européen des brevets

(11) **EP 2 739 498 B1**

(12) **FASCICULE DE BREVET EUROPEEN**

(45) Date de publication et mention
de la délivrance du brevet:
**27.07.2016 Bulletin 2016/30**

(21) Numéro de dépôt: **12751091.5**

(22) Date de dépôt: **27.07.2012**

(51) Int Cl.:
***B60K 28/06*** *(2006.01)*   ***G08B 21/06*** *(2006.01)*

(86) Numéro de dépôt international:
**PCT/FR2012/051784**

(87) Numéro de publication internationale:
**WO 2013/017787 (07.02.2013 Gazette 2013/06)**

(54) **SYSTÈME ET PROCÉDÉ PRÉDICTIF D'UN ÉTAT DE SOMNOLENCE D'UN CONDUCTEUR DE VÉHICULE**

SYSTEM UND VERFAHREN ZUR VORHERSAGE DER SCHLÄFRIGKEIT DES FAHRERS EINES FAHRZEUGES

SYSTEM AND METHOD FOR PREDICTING A STATE OF DROWSINESS OF A VEHICLE DRIVER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **01.08.2011 FR 1102404**

(43) Date de publication de la demande:
**11.06.2014 Bulletin 2014/24**

(73) Titulaire: **Coyote System**
**92150 Suresnes (FR)**

(72) Inventeurs:
• **PIERLOT, Fabien**
**F-92150 Suresnes (FR)**
• **VAN LAETHEM, Jean-Marc**
**F-92150 Suresnes (FR)**

(74) Mandataire: **Schwalek, Valérie**
**SCB**
**23, rue du Faubourg d'Arras**
**59000 Lille (FR)**

(56) Documents cités:
**EP-A1- 0 119 484      WO-A1-2008/143399**
**WO-A2-2007/106722    DE-A1-102005 057 267**
**DE-U1- 20 119 203**

**Description**

La présente invention concerne un système et un procédé prédictifs d'un état de somnolence d'un conducteur de véhicule et plus précisément un système et un procédé aptes à fournir à ces derniers un avertissement avant l'apparition des premiers symptômes d'endormissement.

On sait que la somnolence au volant figure parmi les causes d'accidents les plus importantes recensées à l'heure actuelle.

L'une des difficultés rencontrées par le conducteur en état de somnolence est qu'il n'est pas en mesure d'analyser les signes précurseurs de celui-ci et qu'il ne peut en conséquence apporter une réaction appropriée.

On a proposé jusqu'à présent différents types de solutions dont un certain nombre sont basées sur la détection d'une modification physique de l'attitude du conducteur lorsqu'il se trouve atteint de somnolence.

On a ainsi proposé dans les brevets WO 2008/143399 et WO 2009/084042 de mettre en oeuvre des technologies de reconnaissance faciale du conducteur. A cet effet la voiture est munie d'une caméra qui filme en permanence le visage du conducteur et des moyens d'analyse interprètent en temps réel les modifications de celui-ci. Ce système est ainsi en mesure de détecter les symptômes prémonitoires d'un état de somnolence tels que bâillements, clignement des paupières ou affaissement de la tête du conducteur.

Il a été démontré que ces systèmes sont d'une part assez lourds à mettre en place et requièrent des moyens techniques relativement complexes et d'autre part qu'ils sont facilement sujets à de fausses alertes, notamment lorsque le conducteur est amené à bouger la tête pour effectuer une intervention particulière en cours de conduite telle que par exemple le réglage de son autoradio.

Le document EP 019484 A1 décrit un système et un dispositif comprenant les caractéristiques du préambule des revendications 1 et 14.

On a également proposé dans le modèle d'utilité japonais N°57-57126 une méthode de détection de la somnolence d'un conducteur basée sur le nombre d'impulsions appliquées par ce dernier sur le volant de son véhicule au cours de sa conduite, les impulsions étant prises en compte dès lors que leur amplitude dépasse un seuil angulaire déterminé. Outre la complexité de cette méthode, celle-ci présente l'inconvénient de n'être pas très précise en raison notamment des perturbations induites par les accidents de surface de la chaussée.

Le brevet EP 0 119 483 quant à lui se propose de corriger cette cause d'imprécision en prenant en compte l'état de la chaussée sur laquelle roule le véhicule afin d'interrompre la veille lorsque celui-ci est de nature à perturber la mesure. L'inconvénient de cette méthode est que, d'une part, sa mise en oeuvre est fastidieuse pour le conducteur et que, d'autre part, la somnolence du conducteur peut parfaitement intervenir pendant le temps de désactivation du système de surveillance.

Tous ces systèmes de l'état antérieur de la technique interviennent auprès du conducteur une fois qu'ils ont détecté les conséquences d'un comportement somnolent de celui-ci, autrement dit dès que le conducteur devient dangereux potentiellement.

La présente invention propose d'intervenir avant que les symptômes de la somnolence se manifestent chez le conducteur, autrement dit avant qu'elle ne devienne dangereuse pour celui-ci et pour les autres conducteurs.

Par ailleurs, le système prédictif d'un état de somnolence d'un conducteur proposé par la présente invention ne fait pas appel à des moyens de détection d'un comportement physique du conducteur, qui sont très facilement sujets aux perturbations extérieures. De plus, les moyens proposés par la présente invention sont personnalisables à la sensibilité à l'endormissement de chaque conducteur et leur précision s'améliore en fonction de leur temps d'utilisation.

La présente invention a ainsi pour objet un système prédictif d'un état de somnolence d'un conducteur de véhicule, du type comportant un serveur distant et un dispositif embarqué à bord de celui-ci et qui sont aptes à communiquer l'un avec l'autre caractérisé en ce que le dispositif embarqué comporte:

- des moyens aptes à compter le temps de circulation du véhicule depuis le dernier arrêt de celui-ci,
- des moyens aptes à déterminer l'heure, de façon à établir un indice des horaires critiques,
- des moyens aptes à déterminer périodiquement, sur une période de temps donnée, au moins les variations successives de cap et/ou de vitesse du véhicule, de façon à établir un indice d'inactivité du conducteur,
- des moyens aptes à déterminer un temps de conduite avant alerte qui est fonction d'au moins ledit indice d'inactivité et de l'indice des horaires critiques.

Le système prédictif suivant l'invention pourra préférentiellement comporter des moyens aptes à prendre en compte, dans la détermination du temps de conduite avant alerte, d'un indice de personnalisation propre à chaque conducteur.

Par ailleurs, le système de gestion du dispositif embarqué pourra comporter des moyens aptes à pondérer, au moyen de coefficients qui dépendent de réponses faites par l'ensemble des conducteurs liés au système, les indices des horaires critiques et d'inactivité du conducteur.

Dans un mode de mise en oeuvre de l'invention le système de gestion du dispositif embarqué comportera des moyens aptes à interroger le conducteur et à prendre en compte ses réponses relatives à son déficit de sommeil et à générer un indice de déficit de sommeil qui sera pris en compte dans la détermination du temps de conduite avant alerte ($T_{DAS}$).

Les moyens de gestion du dispositif embarqué pourront comporter par ailleurs des moyens aptes, lorsque le temps de circulation du véhicule depuis son dernier arrêt devient supérieur au temps de conduite avant alerte, à déclencher une alerte à l'attention du conducteur. Cette alerte pourra être suivie d'une demande à l'attention de ce dernier afin de savoir si celui-ci éprouve des symptômes précurseurs d'une situation de somnolence.

Le dispositif embarqué pourra comporter des moyens aptes à répondre à ladite demande, notamment au moyen d'un clavier permettant de composer une réponse de type binaire oui/non.

Dans l'hypothèse d'une réponse affirmative, les moyens de gestion du dispositif embarqué décrémenteront d'une valeur donnée le temps de conduite avant alerte et, en cas d'une réponse négative, ils incrémenteront celui-ci d'une valeur donnée.

Les moyens de gestion du dispositif embarqué pourront être aptes à communiquer au serveur distant l'ensemble des paramètres et réponses recueillis lors du déclenchement d'une alerte.

Enfin le serveur distant pourra comporter des moyens aptes, de façon périodique, notamment une fois par jour, à réaliser une analyse statistique des paramètres et réponses recueillis lors du déclenchement d'une alerte afin de préciser les coefficients de pondération des indices des horaires critiques et d'inactivité du conducteur.

La présente invention a également pour objet un procédé prédictif d'un état de somnolence d'un conducteur de véhicule mettant en oeuvre un dispositif du type décrit précédemment.

La présente invention a également pour objet un dispositif embarqué à bord d'un véhicule, comportant :

- des moyens aptes à compter le temps de conduite du véhicule depuis le dernier arrêt de celui-ci,
- des moyens aptes à déterminer l'heure, de façon à établir un indice des horaires critiques,
- des moyens aptes à déterminer périodiquement, sur une période de temps donnée, au moins les variations successives de cap et/ou de vitesse du véhicule, de façon à établir un indice d'inactivité du conducteur,
- des moyens aptes à déterminer un temps de conduite avant alerte qui est fonction d'au moins ledit indice d'inactivité et de l'indice des horaires critiques.

On sait que l'une des difficultés rencontrées dans les systèmes de ce type tient au fait que l'effet de somnolence se fait sentir de façon très différente d'un individu à un autre et ceci en raison de sa morphologie, de son caractère, de ses habitudes, etc. La présente invention est particulièrement intéressante en ce qu'elle permet de prendre en compte les différentes particularités de chacun des individus dans leurs façons de réagir spécifiques vis à vis du sommeil.

Ainsi, suivant l'invention, en partant d'un modèle général, c'est au cours de l'usage du système que ce dernier « apprendra » de l'utilisateur lui-même les caractéristiques spécifiques de ce dernier. Et plus le système sera utilisé et plus il deviendra précis et fiable.

On décrira ci-après, à titre d'exemple non limitatif, une forme d'exécution de la présente invention, en référence au dessin annexé sur lequel :

- la figure 1 est une vue générale d'un système prédictif suivant l'invention,

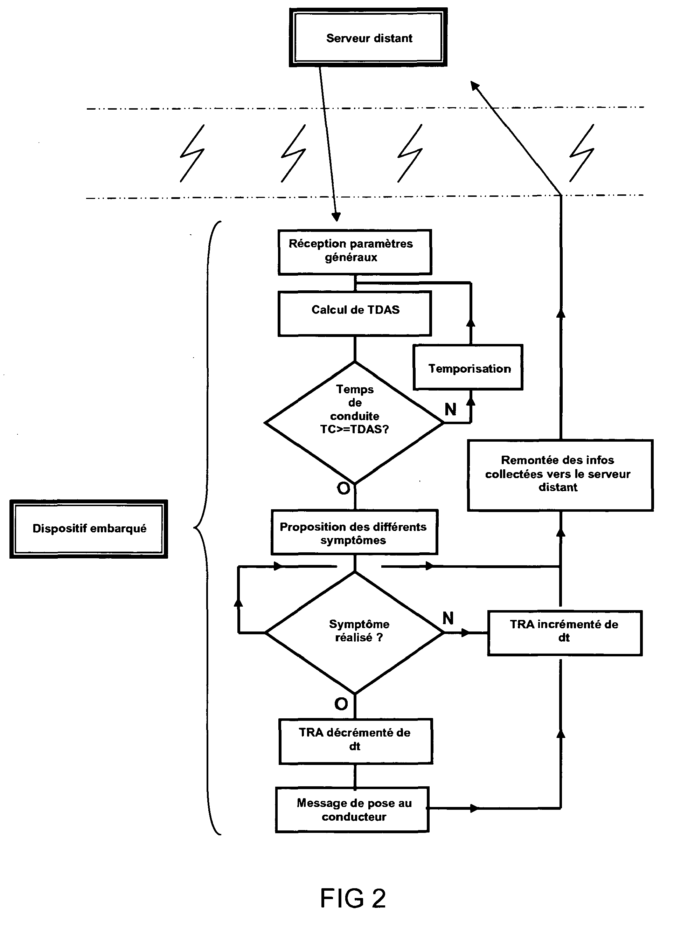

- la figure 2 est un ordinogramme montrant les différentes étapes du procédé suivant l'invention.

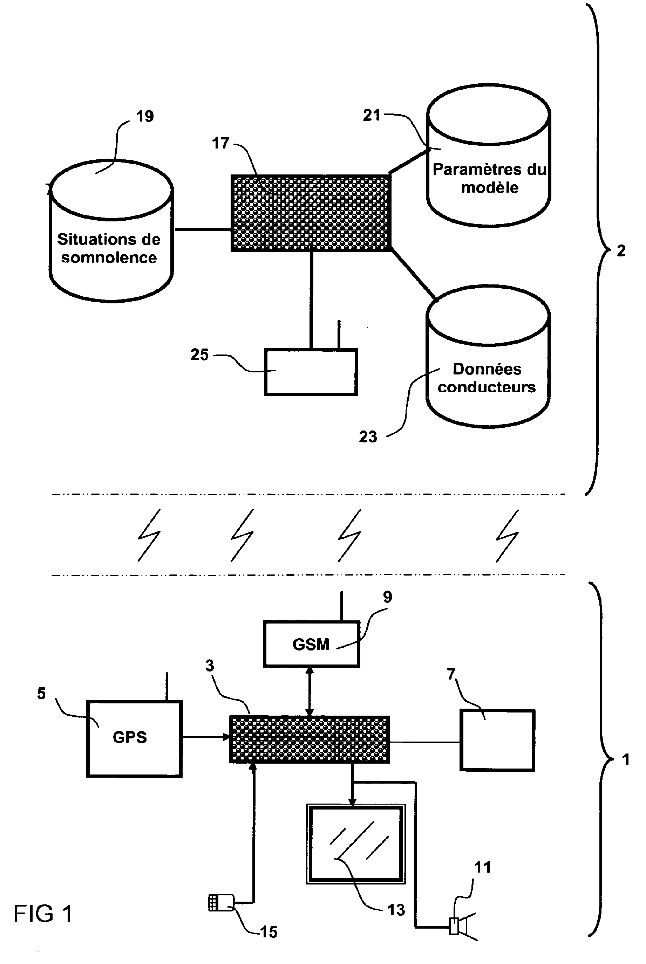

Dans le présent mode de mise en oeuvre de l'invention, et ainsi que représenté sur la figure 1, le système prédictif d'un état de somnolence d'un conducteur de véhicule comprend un dispositif embarqué 1 sur celui-ci et un serveur distant 2.

Le dispositif embarqué 1 sur le véhicule est constitué d'un microprocesseur 3 qui assure la gestion logique de différents éléments périphériques, à savoir des moyens de géolocalisation 5 de type GPS, une mémoire 7 facilement et rapidement accessible et modifiable, telle que par exemple une mémoire flash, et des moyens de communication 9 avec le serveur distant 2 notamment de type GSM. Le dispositif embarqué 1 comprend également des moyens aptes à permettre au conducteur de recevoir des messages du serveur distant 2 sous forme sonore au moyen d'un haut-parleur 11, et/ou sous forme visuelle au moyen d'un écran 13 ainsi que des moyens lui permettant d'envoyer des messages au serveur distant 2, notamment au moyen d'un clavier simplifié 15 et via les moyens de communication 9.

Le serveur distant 2 comporte un processeur 17 qui assure la gestion d'une base de données 19 dans laquelle sont stockées les différentes situations de somnolence, une base de données 21 contenant les paramètres du modèle prédictif et une base de données 23 contenant l'ensemble des paramètres liés aux données recueillies par le dispositif embarqué 1 auprès des conducteurs au cours du fonctionnement du système et envoyé par les moyens de communication 9 au serveur distant, ainsi qu'il sera exposé ci-après, et des moyens de communication 25 avec les différents dispositifs embarqués 1.

On sait que les études qui ont été menées sur l'état de somnolence au volant ont mis en avant les paramètres susceptibles d'influencer en premier lieu sur la somnolence. Ces paramètres sont notamment les suivants :

- le temps de conduite sans arrêt,
- la période de la journée,
- le caractère d'inactivité des conducteurs.

Bien entendu chaque conducteur réagit de façon différente à ces différents paramètres et l'on comprend bien que, par exemple, un chauffeur routier qui aura organisé son temps de sommeil en fonction de son activité, sera moins sensible aux effets de la somnolence dus à une conduite dans une période nocturne que le conducteur moyen.

Le système prédictif d'un état de somnolence suivant l'invention est en mesure de permettre un affinage de sa précision en cours d'usage à plusieurs niveaux: d'une part au niveau général de tous les conducteurs qui utilisent celui-ci, et d'autre part au niveau individuel de chacun des conducteurs.

Pour ce faire le système va déterminer une durée $T_{DAS}$ dite "temps de conduite avant alerte" qui est le temps compté à partir du dernier arrêt du conducteur pendant lequel le système embarqué va laisser le conducteur conduire avant de déclencher une alerte; cette alerte devant être la plus proche possible du moment où le conducteur va ressentir les signes précurseurs de la somnolence.

Pour déterminer cette durée, le système pourra prendre en compte, notamment, les trois éléments suivants, à savoir:

- $I_C$ qui est un indice d'inactivité du conducteur. Le système embarqué prendra en compte les différentes actions réalisées par le conducteur au cours de sa conduite à deux niveaux, à savoir activité au niveau du volant et activité au niveau des vitesses,
- $I_{HR}$ qui est un indice relatif à l'heure de la conduite. Les statistiques connues relatives aux accidents montrent en effet que le conducteur s'endort plus facilement la nuit et après les heures de repas, notamment le déjeuner, que pendant les heures normales de la journée,
- $T_{CM}$ l'indice de durée de conduite sans arrêt maximum statistique moyen de tous les conducteurs avant que les premiers signes de somnolence n'apparaissent, et que le système fixera au départ comme étant égal, par exemple à 240 min. Cette valeur sera ensuite corrigée en fonction des valeurs statistiques remontées vers le serveur distant 1 par l'ensemble des conducteurs utilisant le système.

1) Détermination de l'indice d'inactivité $I_C$ :

Cet indice est susceptible de prendre une valeur, par exemple de 0 à 10. Pour ce faire le système embarqué, au moyen du dispositif de géolocalisation (GPS) qui est à bord du véhicule, va mesurer en permanence sur une période de temps T déterminée, par exemple 10 min, les changements de cap du véhicule. Ainsi un véhicule qui roulera pendant la période de temps T sur une route droite se verra affecter un coefficient maximal de 10, puisque son inactivité sera maximale, alors qu'un véhicule qui roulera sur une route en lacets se verra affecter un indice minimal de 0 puisque son inactivité sera minimale. Entre ces différentes valeurs le système, à partir par exemple d'un tableau conservé en mémoire 21, affectera une valeur à l'indice $I_C$.

On peut également faire intervenir les changements de vitesse dans la valeur de l'indice $I_C$ puisque de tels changements sont détectables et mesurables par le GPS.

Le dispositif embarqué 1 est ainsi en mesure, en fonction d'un Tableau I du type de celui représenté ci-après et qui est stocké dans la mémoire 7 du microprocesseur 3, de donner une valeur à l'indice IC qui prend en compte le degré d'inactivité du conducteur au niveau à la fois du cap et de la vitesse.

TABLEAU I

| INACTIVITE IC DU CONDUCTEUR | VARIATIONS DE CAP | | |
|---|---|---|---|
| VARIATIONS DE VITESSE | | moyen | faible | très faible |
| moyen | 0 | 3 | 5 |
| faible | 3 | 5 | 7 |
| très faible | 5 | 7 | 10 |

2) - Détermination de l'indice relatif à l'heure de conduite $I_{HR}$ :

Le système embarqué 1 comporte en mémoire 7 un Tableau II qui fournit, sur la base des données relatives aux accidents routiers ayant pour cause le sommeil, cet indice $I_{HR}$.

Un tel tableau est par exemple :

TABLEAU II

| Heures | 0-3 | 3-6 | 6-9 | 9-12 | 12-15 | 15-18 | 18-21 | 21-24 |
|---|---|---|---|---|---|---|---|---|
| Indice $I_{HR}$ | 10 | 10 | 0 | 0 | 10 | 0 | 3 | 5 |

3) - Détermination de l'indice de durée de conduite sans pose $T_{CM}$ :

L'indice de durée de conduite sans pose $T_{CM}$ est la durée qui est communément admise pendant laquelle un conducteur moyen peut rouler sans qu'apparaissent les premiers symptômes précurseurs de somnolence. Il s'agit d'une donnée de statistique générale qui est de l'ordre de 4 heures.

L'indice $T_{CM}$ est fixé à cette valeur de 240 minutes à la mise en service du système, mais elle sera constamment affinée au fur et à mesure des réponses collectées par le système auprès des conducteurs, ainsi qu'il sera expliqué ci-après.

4) - Détermination de l'indice de durée de report d'alerte $T_{RA}$

Cet indice $T_{RA}$ est un indice qui permet, en fonction de chaque conducteur, de moduler la valeur du temps de conduite avant alerte $T_{DAS}$, et ceci en fonction des réponses faites par celui-ci aux questions que lui posera le système embarqué, ainsi qu'expliqué ci-après. Cette valeur sera recalculée jusqu'à ce qu'elle se stabilise en fonction des fausses alertes.

Dans ces conditions, le fonctionnement global du système est le suivant.

On part d'un modèle prédictif général qui est stocké dans la mémoire 7 du microprocesseur 3 du système embarqué 1 et ce dernier calcule périodiquement, avec une fréquence de l'ordre par exemple de toutes les minutes, la valeur de $T_{DAS}$ suivant la formule suivante:

$$T_{DAS} = T_{CM} + a.I_C - b.I_{HR} + T_{RA} \ (1)$$

dans laquelle $\underline{a}$ et $\underline{b}$ sont des coefficients de pondération des indices $I_C$ et $I_{HR}$.

Les valeurs de ces coefficients $\underline{a}$ et $\underline{b}$ ainsi que la valeur de $T_{CM}$ sont celles du modèle prédictif général de départ et ces valeurs seront affinées au cours du temps, de façon statistique, en fonction des réponses faites par l'ensemble des utilisateurs du système aux questions posée par le système embarqué.

Modèle prédictif général

Il est établi, sur la base de la définition des coefficients de pondération a, b, et de l'indice de durée de conduite sans pose $T_{CM}$ qui seront pris au démarrage du système avant que celui ne soit affiné au cours de son utilisation. Pour ce faire :

a) On prendra pour valeur de $T_{CM}$ de départ une valeur résultant de statistiques extérieures ainsi que précisé précédemment soit $T_{CM}$ = 240 min,

b) Pour déterminer a on pose par exemple, en tant que postulat, le fait que l'on veut par exemple émettre une alerte à un conducteur qui roule depuis 210 min sur une route moyennement sinueuse. La formule (1) donne alors:

$$210 = 240 - a \ . \ 5$$

ce qui nous donne a = 6

c) c) De même pour déterminer b on pose que l'on veut avancer l'alerte de 60 min pendant les heures où le risque est le plus élevé soit, ainsi que le montre le Tableau II, de 0h à 6h du matin. La formule (1) donne alors:

$$180 = 240 - 0 - b.10 + 0$$

ce qui nous donne b = 6.

La formule du modèle prédictif général devient alors ainsi :

$$T_{DAS} = 240 - (6 \cdot I_C) - (6 \cdot I_{HR}) + T_{RA} \quad (2)$$

Sur la base de ce modèle prédictif général le dispositif embarqué 1 calcule avec une périodicité, par exemple de l'ordre de toutes les minutes, le temps $T_{DAS}$ au bout duquel on déclenchera une alerte de somnolence. Suivant l'invention, le dispositif embarqué 1 mesure le temps de conduite TC et, lorsque celui-ci vient à dépasser cette valeur ($Tc >= T_{DAS}$), le système embarqué émet une alerte à destination du conducteur.

Cette alerte peut être constituée d'un message sonore au moyen du haut parleur 11 et/ou d'un message visuel sur l'écran 13. Puis le système interroge le conducteur afin de savoir s'il ressent une série déterminée des symptômes qui caractérisent un début de somnolence, à savoir notamment:

- bâillements,
- oeil qui papillote,
- raideur du cou,
- envie de fermer les yeux,
- etc.

Le conducteur répond à ces questions par une réponse de type oui/non par un simple appui sur un bouton du clavier simplifié 15.

Si le conducteur répond "non", cela signifie qu'il lui est possible de conduire pendant une plus longue durée sans être sujet à la somnolence et, dans ces conditions, le système allonge son temps de conduite avant alerte $T_{DAS}$ en augmentant son indice de temps de report d'alerte $T_{RA}$ d'une valeur $\delta t$ par exemple de 30 min, si bien que la prochaine alerte se produira, pour ce conducteur, trente minutes plus tard.

Au contraire, si le conducteur répond "oui", cela signifie qu'il ressent au moins l'un des symptômes annonçant la somnolence, et le système embarqué diminue son temps de conduite avant alerte $T_{DAS}$ en diminuant son indice de temps de report d'alerte $T_{RA}$ d'une valeur $\delta t$ par exemple de 30 min, si bien que la prochaine alerte se produira, pour ce conducteur, trente minutes plus tôt.

Ensuite, le dispositif embarqué 1 envoie au conducteur un message de recommandation visuel et/ou sonore lui indiquant, s'il se trouve sur une autoroute, le nom et la distance de la prochaine aire de repos et, s'il est sur une route simple, qu'il doit s'arrêter le plus tôt possible.

Dans l'hypothèse où le dispositif embarqué 1 ne reçoit aucune réponse du conducteur, il émet alors un message d'alerte sonore strident, dans la mesure où cette non réponse peut être le fait d'un conducteur endormi.

Le dispositif embarqué 1, via ses moyens de communication 9 avec le serveur distant 2, envoie à celui-ci les différentes informations qu'il a reçues du conducteur et ces informations sont prises en compte à deux niveaux, à savoir à un niveau global permettant d'affiner le modèle prédictif général (indice $T_{CM}$, coefficient a et b) en fonction des informations provenant de la totalité des conducteurs et au niveau de chacun des conducteurs en affinant leur seuil de sensibilité personnel (paramètre $T_{RA}$).

On décrira ci-après plusieurs exemples de mise en oeuvre de l'invention.

Exemple 1:

C'est le cas d'un conducteur dont le dispositif embarqué 1 mesure les paramètres suivants:

- Le GPS embarqué 5 détecte que le conducteur roule sur une route sinueuse en raison des multiples changements de cap qu'il effectue. Dans ces conditions le système de gestion du dispositif embarqué 1 à partir du tableau I déduit qu'il est actif et que, en conséquence, son coefficient d'inactivité $I_C$ est égal à 0,
- Le dispositif embarqué consulte son horloge interne et constate qu'il est 10 h du matin. Dans ces conditions une consultation du tableau II donne au système une valeur de $I_{HR}$ égale à 0,
- Le système sait par ailleurs, des informations qui lui ont été communiquées par le serveur distant 2, qu'il s'agit d'un conducteur nouvellement inscrit dans le système, si bien que ce dernier ne dispose d'aucun élément lui permettant de savoir si le temps de conduite avant alerte doit être augmenté ou, au contraire diminué. Le système prend alors une valeur de $T_{RA}$ égale à 0.

Le système embarqué est dès lors en mesure de calculer la valeur du temps de conduite avant alerte $T_{DAS}$ suivant la formule (1) soit:

$$T_{DAS} = 240 + 0 + 0 + 0 = 240 \text{ min}$$

Exemple 2 :

Si ce même conducteur roule désormais sur une route complètement droite vers 22h, le GPS détectera alors une inactivité maximale et le système, par consultation du Tableau I prendra une valeur $I_C = 10$ et par consultation du Tableau II prendra une valeur de $I_{HR}$ égale à 10. Dans ces conditions la valeur du temps de conduite avant alerte $T_{DAS}$ devient:

$$T_{DAS} = 240 - 6 \cdot 10 - 6 \cdot 5 + 0 = 150 \text{ min}$$

Exemple 3 :

Si ce même conducteur, dans les mêmes conditions de conduite que dans l'exemple précédent, avait préalablement répondu à diverses interrogations du dispositif embarqué 1 et qu'il avait été établi, qu'à cette heure de conduite, c'est-à-dire entre 21 et 24 h, il n'éprouvait qu'une faible tendance à la somnolence, son indice de temps de report d'alerte $T_{RA}$ était alors égal à 60, la valeur du temps de conduite avant alerte $T_{DAS}$ devient:

$$T_{DAS} = 240 - 6 \cdot 10 - 6 \cdot 5 + 60 = 210 \text{ min}$$

Le serveur distant 2 analysera périodiquement, par exemple tous les soirs, les données qui lui auront été transmises par tous les dispositifs embarqués 1 de tous les véhicules adhérant au système, ce qui lui permettra de recalculer les valeurs des coefficients de pondération a et b ainsi que l'indice de durée de conduite sans pose $T_{CM}$. Ces valeurs seront ultérieurement envoyées aux dispositifs embarqués 1 des différents véhicules qui les stockeront en mémoire 7.

Dans un mode de mise en oeuvre de la présente invention il est possible de faire appel à un indice supplémentaire permettant d'améliorer la détermination du temps de conduite avant alerte $T_{DAS}$, à savoir un indice $I_{DS}$ relatif au déficit de sommeil du conducteur.

On comprend en effet qu'un conducteur est plus susceptible de s'endormir au volant lorsqu'il se trouve dans une situation de manque de sommeil que lorsqu'il a dormi correctement avant de prendre le volant.

Le système de gestion 3 affichera ainsi sur l'écran 13 un message à destination du conducteur lui demandant s'il se trouve en manque de sommeil et, dans l'affirmative, il pourra lui demander de préciser par exemple le niveau de manque de sommeil qu'il éprouve suivant une échelle proposée. Cette échelle pourra être du type graduée en chiffres par exemple de 1 à 10 ou être du type « faible, moyen, fort, très fort ». Le système de gestion transformera cette estimation du conducteur en un indice de déficit de sommeil $I_{DS}$ de façon telle que l'indice $I_{DS}$ soit égal à 0 lorsque le conducteur n'a aucun déficit de sommeil.

L'indice de déficit de sommeil est alors ajouté à la formule du modèle prédictif qui devient alors :

$$T_{DAS} = T_{CM} + a.I_C - b.I_{HR} - c.I_= + T_{RA}$$

où c est un coefficient de pondération de l'indice $I_{DS}$.

**Revendications**

**1.** Système prédictif d'un état de somnolence d'un conducteur de véhicule, du type comportant

- un serveur distant (2) et un dispositif embarqué (1) à bord de celui-ci et qui sont aptes à communiquer l'un avec l'autre

- des moyens aptes à déterminer périodiquement, sur une période de temps donnée, au moins les variations successives de cap ($\delta C$) et/ou de vitesse ($\delta V$) du véhicule, de façon à établir un indice d'inactivité (I=) du conducteur, **caractérisé en ce que** le dispositif embarqué (1) comporte:

  - des moyens aptes à compter le temps de conduite ($T_C$) du véhicule depuis le dernier arrêt de celui-ci,
  - des moyens aptes à déterminer l'heure, de façon à établir un indice des horaires critiques ($I_{HR}$),
  - des moyens aptes à déterminer un temps de conduite avant alerte ($T_{DAS}$) qui est fonction d'au moins ledit indice d'inactivité (IC) et de l'indice des horaires critiques ($I_{HC}$).

2. Système prédictif suivant la revendication 1 **caractérisé en ce que** le système de gestion du dispositif embarqué (1) comporte des moyens aptes à prendre en compte dans la détermination du temps de conduite avant alerte ($T_{DAS}$) un indice de durée de report d'alerte ($T_{RA}$) propre à chaque conducteur.

3. Système prédictif suivant l'une des revendications 1 ou 2 **caractérisé en ce que** le système de gestion du dispositif embarqué comporte des moyens aptes à pondérer au moyen de coefficients (a, b) qui dépendent de réponses faites par l'ensemble des conducteurs liés au système, les indices des horaires critiques ($I_{HR}$) et/ou d'inactivité ($I_C$) du conducteur.

4. Système prédictif suivant l'une des revendications précédentes **caractérisé en ce que** le système de gestion du dispositif embarqué comporte des moyens aptes à interroger le conducteur et à prendre en compte ses réponses relatives à son déficit de sommeil et à générer un indice de déficit de sommeil ($I_{DS}$) qui est pris en compte dans la détermination du temps de conduite avant alerte ($T_{DAS}$).

5. Système prédictif suivant l'une des revendications précédentes **caractérisé en ce que** les moyens aptes à déterminer les variations de cap et/ou de vitesse sont constitués d'un système de géolocalisation de type GPS.

6. Système prédictif suivant l'une des revendications 1 à 5 **caractérisé en ce que** les moyens de gestion du dispositif embarqué (1) comportent des moyens aptes, lorsque le temps de conduite ($T_C$) du véhicule depuis son dernier arrêt devient supérieur au temps de conduite avant alerte ($T_{DAS}$), à déclencher une alerte à l'attention du conducteur.

7. Système prédictif suivant la revendication 6 **caractérisé en ce que** l'alerte est suivie d'une demande à l'attention du conducteur du véhicule afin de savoir si celui-ci éprouve des symptômes précurseurs d'une situation de somnolence.

8. Système prédictif suivant la revendication 7 **caractérisé en ce que** le dispositif embarqué (1) comporte des moyens aptes à répondre à ladite demande.

9. Système prédictif suivant la revendication 8 **caractérisé en ce que** les moyens de réponse sont constitués d'un clavier (15) aptes à composer une réponse de type binaire oui/non.

10. Système prédictif suivant l'une des revendications 7 à 9 **caractérisé en ce que** dans l'hypothèse d'une réponse affirmative les moyens de gestion du dispositif embarqué (1) décrémentent d'une valeur donnée le temps de conduite avant alerte ($T_{DAS}$) et en cas d'une réponse négative il incrémentent celui-ci d'une valeur donnée.

11. Système prédictif suivant l'une des revendications 7 à 10 **caractérisé en ce que** les moyens de gestion du dispositif embarqué (1) sont aptes à communiquer au serveur distant (2) l'ensemble des paramètres et réponses recueillis lors du déclenchement d'une alerte.

12. Système prédictif suivant l'une des revendications précédentes **caractérisé en ce que** le serveur distant (1) comporte des moyens aptes, de façon périodique, notamment une fois par jour, à réaliser une analyse statistique des paramètres et réponses recueillis lors du déclenchement d'une alerte afin de préciser la valeur des coefficients de pondération (a,b) des indices des horaires critiques (IHR) et d'inactivité ($I_C$) du conducteur.

13. Procédé prédictif d'un état de somnolence d'un conducteur de véhicule **caractérisé en ce qu'**il met en oeuvre un dispositif suivant l'une des revendications 1 à 12.

14. Dispositif embarqué à bord d'un véhicule comportant des moyens aptes à déterminer périodiquement, sur une période de temps donnée, au moins les variations successives de cap ($\delta$C) et/ou de vitesse ($\delta$V) du véhicule, de façon à établir un indice d'inactivité ($I_C$) du conducteur, **caractérisé en ce qu'**il comporte:

- des moyens aptes à compter le temps de conduite ($T_C$) du véhicule depuis le dernier arrêt de celui-ci,
- des moyens aptes à déterminer l'heure, de façon à établir un indice des horaires critiques ($I_{HR}$),
- des moyens aptes à déterminer un temps de conduite avant alerte ($T_{DAS}$) qui est fonction d'au moins ledit indice d'inactivité ($I_C$) et de l'indice des horaires critiques ($I_{HR}$).

**Patentansprüche**

1. System zur Vorhersage eines Zustands der Schläfrigkeit eines Fahrers eines Kraftfahrzeugs vom Typ mit

- einem Remote-Server (2) und einer an Bord von diesem befindlichen Vorrichtung (1), die geeignet sind, miteinander zu kommunizieren,
- Mitteln, die geeignet sind, periodisch für eine vorgegebene Zeitperiode mindestens die aufeinanderfolgenden Variationen des Kurses ($\delta$C) und / oder der Geschwindigkeit ($\delta$V) des Kraftfahrzeugs zu bestimmen, um so einen Index der Inaktivität (I=) des Fahrers zu ermitteln, **dadurch gekennzeichnet, dass** die an Bord befindliche Vorrichtung (1) umfasst:

- Mittel, die geeignet sind, die Fahrtzeit ($T_C$) des Kraftfahrzeugs seit dem letzten Halt von diesem zu messen;
- Mittel, die geeignet sind, die Zeit zu bestimmen, um einen Index der kritischen Zeitangaben ($I_{HR}$) zu bestimmen,
- Mittel, die geeignet sind, eine Fahrtzeit vor der Warnung ($TD_{AS}$) zu bestimmen, die eine Funktion zumindest von dem Index der Inaktivität (IC) und von dem Index der kritischen Zeitangaben ($I_{HR}$) ist.

2. System zur Vorhersage nach Anspruch 1, **dadurch gekennzeichnet, dass** das System zur Ausführung der an Bord befindlichen Vorrichtung (1) Mittel umfasst, die geeignet sind, bei der Bestimmung der Fahrtzeit vor dem Alarm ($T_{DAS}$) einen Index der Dauer der Anzeige des Alarms ($T_{RA}$) zu berücksichtigen, die für jeden Fahrer eigen ist.

3. System zur Vorhersage nach einem der Ansprüche 1 oder 2, **dadurch gekennzeichnet, dass** das System zur Ausführung der an Bord befindlichen Vorrichtung Mittel umfasst, die geeignet sind, Koeffizienten (a, b) durchschnittlich zu gewichten, die von den Antworten, die von der Gesamtheit der Fahrer gemacht werden, die mit dem System verbunden sind, den Indizes der kritischen Zeitangaben ($I_{HR}$) und / oder der Inaktivität ($I_C$) des Fahrers abhängen.

4. System zur Vorhersage nach einem der vorhergehenden Ansprüche, **dadurch gekennzeichnet, dass** das System zur Ausführung der an Bord befindlichen Vorrichtung Mittel umfasst, die geeignet sind, den Fahrer zu befragen und die Antworten zu berücksichtigen, die sich auf sein Defizit an Schlaf beziehen, und einen Index des Defizits an Schlaf ($I_{DS}$) zu erzeugen, der bei der Bestimmung der Fahrtzeit vor dem Alarm ($T_{DAS}$) berücksichtigt wird.

5. System zur Vorhersage nach einem der vorhergehenden Ansprüche, **dadurch gekennzeichnet, dass** die Mittel, die geeignet sind, die Variationen des Kurses und / oder der Geschwindigkeit zu bestimmen, aus einem System der Geolokalisation vom Typ GPS bestehen.

6. System zur Vorhersage nach einem der Ansprüche 1 bis 5, **dadurch gekennzeichnet, dass** die Mittel zur Ausführung der an Bord befindlichen Vorrichtung (1) Mittel umfassen, die geeignet sind, während die Fahrtzeit ($T_C$) des Kraftfahrzeugs seit seinem letzten Halt größer als die Fahrtzeit vor dem Alarm ($T_{DAS}$) wird, einen Alarm zur Kenntnisnahme des Fahrers auszulösen.

7. System zur Vorhersage nach Anspruch 6, **dadurch gekennzeichnet, dass** der Alarm von einer Anfrage zur Kenntnisnahme des Fahrers des Kraftfahrzeugs gefolgt wird, um zu wissen, ob dieser symptomatische Anzeichen einer Situation der Schläfrigkeit verspürt.

8. System zur Vorhersage nach Anspruch 7, **dadurch gekennzeichnet, dass** die an Bord befindliche Vorrichtung (1) Mittel umfasst, die geeignet sind, auf die Anfrage zu antworten.

9. System zur Vorhersage nach Anspruch 8, **dadurch gekennzeichnet, dass** die Mittel zum Antworten aus einer Tastatur (15) bestehen, die geeignet ist, eine Antwort vom binären Typ ja / nein zu verfassen.

**10.** System zur Vorhersage nach einem der Ansprüche 7 bis 9, **dadurch gekennzeichnet, dass** bei der Hypothese einer affirmativen Antwort die Mittel zur Ausführung der an Bord befindlichen Vorrichtung (1) die Fahrtzeit vor dem Alarm ($T_{DAS}$) um einen vorgegebenen Wert verringern, und im Fall einer negativen Antwort diesen um einen vorgegebenen Wert erhöhen.

**11.** System zur Vorhersage nach einem der Ansprüche 7 bis 10, **dadurch gekennzeichnet, dass** die Mittel zur Ausführung der an Bord befindlichen Vorrichtung (1) geeignet sind, an den Remote-Server (2) die Gesamtheit der Parameter und Antworten, die während des Auslösens eines Alarms erhalten werden, zu kommunizieren.

**12.** System zur Vorhersage nach einem der vorhergehenden Ansprüche, **dadurch gekennzeichnet, dass** der Remote-Server (1) Mittel umfasst, die geeignet sind, auf periodische Weise, insbesondere einmal pro Tag, eine statistische Analyse der Parameter und Antworten auszuführen, die während des Auslösens eines Alarms erhalten werden, um den Wert der Gewichtungskoeffizienten (a, b) der Indizes der kritischen Zeitangaben (IHR) und der Inaktivität ($I_C$) des Fahrers zu präzisieren.

**13.** Verfahren zur Vorhersage des Zustands der Schläfrigkeit eines Fahrers von einem Kraftfahrzeug, **dadurch gekennzeichnet, dass** es eine Vorrichtung nach einem der Ansprüche 1 bis 12 einsetzt.

**14.** Am Bord eines Kraftfahrzeug befindliche Vorrichtung mit Mitteln, die geeignet sind, periodisch mit einer vorgegebenen Zeitperiode mindestens die aufeinanderfolgenden Variationen des Kurses ($\delta$C) und / oder der Geschwindigkeit ($\delta$V) des Kraftfahrzeugs zu bestimmen, um so einen Index der Inaktivität ($I_C$) des Fahrers zu ermitteln, **dadurch gekennzeichnet, dass** sie umfasst:

- Mittel, die geeignet sind, die Fahrtzeit ($T_C$) des Kraftfahrzeugs seit dem letzten Halt von diesem zu messen;
- Mittel, die geeignet sind, die Zeit zu bestimmen, um einen Index der kritischen Zeitangaben ($I_{HR}$) zu bestimmen,
- Mittel, die geeignet sind, eine Fahrtzeit vor der Warnung ($T_{DAS}$) zu bestimmen, die eine Funktion zumindest von dem Inaktivitätsindex ($I_C$) und von dem Index der kritischen Zeitangaben ($I_{HR}$) ist.

**Claims**

**1.** System predicting the state of drowsiness of a vehicle driver, of the type comprising

- a remote server (2) and a device (1) on board it which are able to communicate with each other,
- means able to determine periodically, over a given period of time, at least the successive variations in heading ($\delta$C) and/or speed ($\delta$V) of the vehicle, so as to establish an inactivity index (1=) for the driver, **characterised in that** the onboard device (1) comprises:

- means able to count the driving time ($T_C$) of the vehicle since the last stoppage thereof,
- means able to determine the time, so as to establish a critical times index ($I_{HR}$),
- means able to determine a driving time before alert ($T_{DAS}$) that is a function of at least said inactivity index (IC) and the critical times index ($I_{HC}$).

**2.** Predictive system according to claim 1, **characterised in that** the management of the onboard device (1) comprises means able to take into account, in determining the driving time before alert ($T_{DAS}$), an alert postponement duration index ($T_{RA}$) particular to each driver.

**3.** Predictive system according to one of claims 1 or 2, **characterised in that** the management system of the onboard device comprise means able to weight, by means of coefficients (a, b) that are dependent on responses made by all the drivers connected to the system, the indices of the critical times ($I_{HR}$) and/or inactivity ($I_C$) of the driver.

**4.** Predictive system according to one of the preceding claims, **characterised in that** the management system of the onboard device comprises means able to interrogate the driver and to take into account his responses relating to his sleep deficit and to generate a sleep deficit index ($I_{DS}$) that is taken into account in the determination of the driving time before alert ($T_{DAS}$).

5. Predictive system according to one of the preceding claims, **characterised in that** the means able to determine the variations in heading and/or speed consist of a geolocation system of the GPS type.

6. Predictive system according to one of claims 1 to 5, **characterised in that** the management means of the onboard device (1) comprises means able, when the driving time ($T_C$) of the vehicle since its last stop becomes greater than the driving time before alert ($T_{DAS}$), to trigger an alert for the attention of the driver.

7. Predictive system according to claim 6, **characterised in that** the alert is followed by a request for the attention of the driver of the vehicle as to whether the latter is experiencing symptoms that are precursors of a drowsiness situation.

8. Predictive system according to claim 7, **characterised in that** the onboard device (1) comprises means able to respond to said request.

9. Prediction system according the claim 8, **characterised in that** the response means consist of keypad (15) able to key in a response of the yes/no binary type.

10. Predictive system according to one of claims 7 to 9, **characterised in that**, in the case of an affirmative response, the management means of the onboard device (1) decrement the driving time before alert ($T_{DAS}$) by a given amount and, in the case of a negative response, it increments it by a given amount.

11. Predictive system according to one of claims 7 to 10, **characterised in that** the management means of the onboard device (1) are able to communicate to the remote server (2) all the parameters and responses collected when an alert is triggered.

12. Predictive system according to one of the preceding claims, **characterised in that** the remote server (1) comprises means able, periodically, in particular once a day, to carry out a statistical analysis of the parameters and responses collected when an alert is triggered in order to specify the weighting coefficients (a, b) for the indices of critical times ($I_{HR}$) and inactivity ($I_C$) of the driver.

13. Method for predicting a state of drowsiness of a vehicle driver, **characterised in that** it uses a device according to one of claims 1 to 12.

14. Device installed on board a vehicle, comprising means able to periodically determine, over a given period of time, at least the successive variations in heading ($\delta C$) and/or speed ($\delta V$) of the vehicle, so as to establish an inactivity index ($I_C$) for the driver, **characterised in that** it comprises:

    - means able to count the driving time ($T_C$) of the vehicle since the last stop thereof,
    - means able to determine the time, so as to establish a critical times index ($I_{HR}$),
    - means able to determine a driving time before alert ($T_{DAS}$) that is a function of at least said inactivity index ($I_C$) and of the critical times index ($I_{HR}$).

**19**

**17**

**21**

Paramètres du modèle

Situations de somnolence

**25**

Données conducteurs

**23**

**2**

**9**

GSM

**5**

**3**

GPS

**7**

**11**

**13**

**15**

FIG 1

**1**

FIG 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008143399 A
- WO 2009084042 A
- EP 019484 A1
- EP 5757126 A
- EP 0119483 A